# EUROPEAN PATENT SPECIFICATION

(11) **EP 1 369 362 B1**
(45) Date of publication and mention of the grant of the patent: **02.09.2009**
(21) Application number: 01273381.2
(22) Date of filing: 20.12.2001
(51) Int. Cl.: B65G 47/28, B65B 35/24, B65B 35/56, B65B 61/24, B65B 63/02, B65B 51/32, B65G 15/16, B65G 47/08, B65G 47/31, B65B 57/00, B65B 1/46

(54) **ARTICLE FEEDING DEVICE**
ZUFÜHRVORRICHTUNG FÜR ARTIKEL
DISPOSITIF D'ALIMENTATION EN ARTICLES

(30) Priority: 16.02.2001 JP 2001039591
(43) Date of publication of application: 10.12.2003
(73) Proprietor: ISHIDA CO., Ltd., Kyoto-shi, Kyoto 606-8392 (JP)
(72) Inventor: Kitagawa, Kazumi c/o Ishida Co., Ltd., Ritto-shi, Shiga 520-3026 (JP); Shimomae, Yoshinobu c/o Ishida Co., Ltd., Ritto-shi, Shiga 520-3026 (JP)
(74) Representative: Skone James, Robert Edmund
(86) International application number: PCT/JP2001/011222
(87) International publication number: WO 2002/064465

(56) References cited:
- EP-A- 0 535 543
- EP-A- 0 556 497
- EP-A- 1 086 897
- JP-A- 6 032 327
- JP-A- 54 020 567
- JP-B2- 55 050 851
- JP-U- 48 094 261

## Description

### FIELD OF THE INVENTION

The present invention relates to the field of art of transportation and supply of products.

### BACKGROUND ART

Snacks such as, for example, potato chips that have been packaged in bags each containing a quantity of such snacks having been weighed to a target weight are, before they are shipped to the market, subjected to one of various inspections to the weight test by means of a weight checker, a seal test by means of a seal checker and a contaminant examination by means of an X-ray inspecting device or a metal detector. In order to secure the handling capacity of each of those quality inspecting machines and also to warrant the accuracy of the test performed by each of those quality inspecting machines, the products to be inspected have to be supplied successively to the corresponding inspecting station one at a time while being spaced a predetermined distance between the neighboring products being supplied. However, considering that the spacing between the neighboring products being supplied that have been successively discharged from a bagging machine at the preceding processing station is not always fixed, the Japanese Laid-open Patent Publication No. 7-61569 discloses the use of a transport apparatus positioned between the bagging machine and the quality inspecting machine and dedicated to perform adjustment of the spacing between the neighboring products being supplied. This transporting apparatus is so designed and so configured to sandwich each of the products being supplied from opposite sides to avoid a fall-down of the product which would otherwise occur when the products are successively transferred from one conveyor to another.

On the other hand, in the production line for the manufacture of the bagged snacks of a kind referred to above, a job of leveling the products is important. At the time of discharge from the bagging machine, the products (which in this case means the bags, each containing contents, that is, snacks filled therein, as well as the contents in their entirety) would be in a condition in which some of the contents may be biased within the corresponding bag and, therefore, inconveniences would occur when the products with their contents biased are successively passed through the quality inspecting machine.

By way of example, where the quality inspecting machine is a weight checker, and if some of the contents within the product are biased, the center of gravity of such product is undesirably shifted to a high position or to such a position that the product can no longer snugly rest on a conveyor. Once this occurs, as the product is weighed while being transported by a conveyor, the product will undergo a rocking motion on the conveyor resulting in generation of an instable signal indicative of the weight of the product. On the other hand, where the quality inspecting machine is a seal checker, the presence of biases of the contents within the respective products renders the products to have varying heights and, accordingly, when the presence or absence of a sealing defect is to be detected in terms of the behavior of a presser plate used to press the bags one at a time, a relatively long time would be required for the behavior of the presser plate to stabilize.

Also, in the case of the X-ray inspecting machine or the metal detector, some of the biased contents would move arbitrarily and/or collapse within the bag during successive transportation of the products and, therefore, an error would occur in a result of detection given by an image processing or a search coil. Particularly with the metal detector, where the product has a product effect, that is, where the product itself has a pseudo-metal property such as often observed in, for example, raw meat, an erroneous detection would be likely to occur unless the product is transported in a uniform manner. In addition, the search coil of the metal detector gives rise to a high sensitivity if the distance between it and the product is small, and, therefore, if the height of the product is even locally large as a result of the presence of the bias in the contents, the coil becomes distant relatively from the product, resulting in a corresponding reduction in capability of detecting metallic matters.

In the meantime, where the preceding processing station includes a vertical pillow type packaging machine, a quantity of contents supplied into a bag are nested at the bottom of the bag and, after the product has been discharged from the packaging machine, the product is transported with the bottom of the bag, where the contents are nested, oriented frontward with respect to the direction of transport thereof. Accordingly, the product so discharged generally represents such a shape that a leading end thereof with respect to the direction of transport exhibits an increased height as a result of the nesting of the contents at the bottom of the bag while a trailing end thereof is thin with a small quantity of the contents. In view of this, it may be contemplated to incorporate into the production line a leveling device such as disclosed in the Japanese Laid-open Patent Publication No. 6-48425 or the Japanese Utility Model Registration No. 2527008. This leveling device includes projections or grooved rollers and is designed to cause the projections or the grooved rollers to apply an impact to the product being transported to level the contents of the product uniformly.

However, incorporation of the leveling device dedicated to perform the leveling job results in not only elongation of the production line, but also the products being susceptible to damage under the influence of the leveling impact and/or distortion of the shape of the product, which would eventually result in inconveniences in the subsequent processing station at which the products are successively packaged in a box.

The present invention has been devised in view of the foregoing situation in the art (see e.g. the Japanese Patent Application No.555-50851) and is intended to enable a leveling job to be performed in the production line of the products without the products being damaged and/or deformed, to enable the spacing between the neighboring products to be adjustable and to avoid elongation of the production line.

### DISCLOSURE OF THE INVENTION

In order to alleviate the foregoing problems, the present invention provides a product supply apparatus disposed between a packaging machine and a quality inspecting machine positioned downstream thereof for successively receiving products, transported from the packaging machine, and then supplying them towards the quality inspecting machine, which apparatus comprises upper and lower transport means for transporting the products successively while sandwiching the products from above and below; characterised by a detecting means for detecting the leading end of each of the products as it is delivered onto the lower transport means; and an interval adjusting means for controlling the transport means by adjusting a speed of the transport means, depending on a difference between a target take-in timing and an actual take-in timing based on a result of detection by the detecting means each time the product is received so as to attain a target interval and for adjusting an interval between the forward and rearward neighbouring products to a target interval on a conveyor positioned downstream of the transport means.

According to the present invention, by controlling the transport means based on a result of detection performed by the product detecting means, it is possible to adjust the interval between the forward and rearward products to the target interval while the products are successively transported. Since the transport means sandwich each product from above and below, the respective product can be pressed by the transport means with the contents consequently flattened to spread in a horizontal direction. Also, since in this condition the upper and lower transport means transport the respective product while holding it firmly, any possible deformation in posture of the respective product during the latter being transported can be suppressed. For the upper and lower transport means, a belt-type conveyor is preferably employed.

In view of the foregoing, it is possible to adjust the product interval while the flattening operation is performed during the transport of the product without the posture of the product being distorted and, consequently, two operations are simultaneously performed, thereby avoiding any possible elongation of the production line. Moreover, in such case, since no impact is applied to the products by means of irregularities such as projections or grooves, the possibility of the products being damaged can be minimized. In addition, since the product is sandwiched between and by the transport means, it is possible to avoid the possibility that the product interval once adjusted may be disordered as a result of displacement in position of the product due to slippage occurring during the transport of the product.

Preferably, the space between the upper and lower transport means gradually varies to a narrow space at a downstream side.

According to this feature, it is possible to achieve a smooth and assured flattening operation of the products. In other words, if the space between the upper and lower transport means is set to a small value from the beginning, a strong force will abruptly act on the product the moment the product is sandwiched between and by the transport means. Once this occur, in the case of the product having been bagged, not only does the possibility arise that contents of the bagged product will be biased to a large lump and then form clusters prior to the contents being spread by the transport means, but also the contents and/or the bag may be cracked, deformed and/or torn out. In view of this, so that when the product is to be sandwiched, a large force can be gradually applied to the product, the space between the transport means is so chosen as to decrease from a large value at an upstream location towards a small value at a downstream location. By so doing, the product is pressed with a small force at first so that the contents can be loosened and, thereafter, the pressing force gradually increases, resulting in completion of the flattening operation smoothly and reasonably.

In a preferred embodiment, the upper and lower transport means may be driven by a single drive source.

The use of the single drive source of the upper and lower transport means makes it possible to easily synchronize the respective transport speeds of the upper and lower transport means with each other. As a result, there is no possibility of the transport speeds deviating from each other and the accuracy of adjustment of the interval between the neighboring products can be secured. Also, no unreasonable stress such as twist will act on the product and, in the case of the product being in the form of a bagged product, such inconveniences as frictional wear, deformation and/or damage of the contents and/or the bag and deviation in posture of the products being transported can be avoided.

In another preferred embodiment, an upstream end of the upper transport means may preferably be disposed at a location upstream of an upstream end of the lower transport means.

According to this, as is the case with the invention as described in Claim 2, it is possible to perform the flattening operation of the product smoothly and assuredly. In other words, in the case of the bagged product, even when the product is sandwiched by causing the upper and lower transport means to press from opposite sides from the very beginning, there is the possibility that the contents may be pressed to large aggregations with fluidization of the contents having been hampered and/or the contents may be cracked and/or deformed as a result of a force abruptly acting on the product. In view of this, when the product is to be sandwiched, the product is first brought into contact with the upstream end of the upper transport means so that the contents can freely fluidize. By so doing, the product then transported from below so as to elevate is first brought into contact with one of the transport means (the upper transport means) so that the contents can be loosened to assume a free state and is subsequently sandwiched between the upper and lower transport means to thereby smoothly perform the flattening operation.

Where the upstream end of the upper transport means overlap the downstream end of the transport means in the preceding processing station, the product is delivered in succession from the transport means in the preceding processing station towards the upper and lower transport means of the product supply apparatus through the transport means in the preceding processing station and the upper transport means of the product supply apparatus. Accordingly, even if the difference in transport speed occurs between the transport means in the preceding processing station and the product supply apparatus, the transport speed of the product will not change abruptly, but change in transport speed occurs progressively (with acceleration reduced) and, accordingly, take-in and delivery of the product can take place smoothly with no trouble.

The upper transport means is preferably movable up and down.

According to this, the space between the upper and lower transport means is not fixed, the upper transport means can be pushed upwardly by the product then received, and the space between the upper and lower transport means naturally varies in dependence on the size, thickness, height and others of the product for each product. Accordingly, problems associated with damages to the products resulting from the excessive spacing between the transport means, less effect resulting from shortage of the pressing force of the transport means, the insufficient spacing between the transport means and/or the excessively strong pressing force enough to rupture the bag can be desirably avoided.

Preferably, a cooling means may be provided for cooling a sealed portion of each of the products which have been bagged.

Where, by way of example the packaging bag is thermally bonded and fused by a packaging machine in the preceding processing station and the packaging bag in the seal checker in the subsequent processing station is subsequently pressed by a presser plate, there is the possibility that unless the seal in the bag is firmly thermally bonded the bag may rupture from it during a seal checking. Accordingly, in the present invention, prior to the product being supplied to the quality inspecting machine in the subsequent processing station, the seal is cooled to facilitate and quickly complete the thermal bonding. Also, in such case, since the cooling operation is performed while the product is transported, the necessity of the use of the elongated production line can be avoided.

For cooling, any method can be employed in which a coolant (gas such as an air or fluid) may be blown or the transport means themselves may be cooled. In particular where the coolant is blown, the transport means are preferably employed in the form of a mesh belt or a plurality of juxtaposed slender belts so that a portion of the product to be cooled can be exposed to the outside.

Preferably, the cooling means is operable to cool each of the bagged products from a side where a longitudinal seal is formed.

According to this feature, particularly where the packaging bag contains a longitudinal seal, the longitudinal seal as well can be cooled simultaneously and the thermal bonding thereof can be facilitated and completed. In other words, the packaging bag generally has a transverse seal formed at opposite ends thereof and the longitudinal seal is formed so as to extend in a direction perpendicular to the transverse seals. The packaging bag discharged from the packaging machine is transported with the transverse seals at the respective ends thereof positioned forwards and rearwards while the longitudinal seal extends in a direction conforming to the transport direction. Accordingly, by cooling the product from the side where the longitudinal seal is present, it is possible to efficiently cool the transverse seals and the longitudinal seal simultaneously. Moreover, since the longitudinal seal extends in the direction conforming to the transport direction, the longitudinal seal can be cooled over its entire length as the bag is transported.

In a further preferred embodiment, the transport means may be provided with a posture modifying means for sandwiching each of the products at a plurality of locations and for controlling a transport speed at each of those locations to thereby correct a posture of each of the product.

According to this feature, while the product is transported, the product interval is adjusted and the product is flattened, the posture of the product can also be adjusted and, therefore, the subsequent processing such as a boxing operation can be performed smoothly. Also, since the posture is rectified while the product is transported, elongation of the production line can also be prevented.

### BRIEF DESCRIPTION OF THE DRAWINGS

In any event, the present invention will become more clearly understood from the following description of preferred embodiments thereof, when taken in conjunction with the accompanying drawings. However, the embodiments and the drawings are given only for the purpose of illustration and explanation, and are not to be taken as limiting the scope of the present invention in any way whatsoever, which scope is to be determined by the appended claims. In the accompanying drawings, like reference numerals are used to denote like parts throughout the several views, and:
Fig. 1 is a block diagram showing a production line employing a product supply apparatus according to the present invention;
Fig. 2 is a side view of the product supplying apparatus with a left frame and a link mechanism of an upper conveyor and a left portion of a support frame removed;
Fig. 3 is a fragmentary enlarged plan view showing the manner in which the product is transported by the product supplying apparatus of the present invention;
Fig. 4 is a time chart showing a comparison between a target spacing between neighboring products and an actual spacing between the neighboring products detected;
Fig. 5 is a time chart showing an example of a control pattern for a transport drive motor;
Fig. 6 is a table used in a spacing adjustment control; and
Fig. 7 is a fragmentary enlarged plan view of the product supply apparatus showing an example of a specific operation of a product posture rectifying control.

### BEST MODE FOR CARRYING OUT THE INVENTION

Hereinafter, a preferred embodiment of the present invention will be described with reference to the accompanying drawings.

### (Overview of the Production Line)

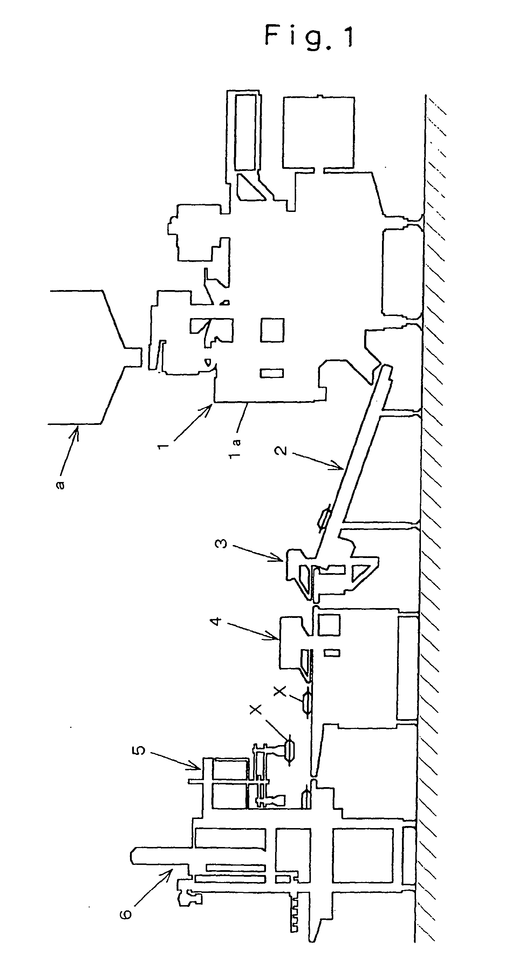

In this embodiment, the present invention is applied to such a production line as shown in Fig. 1. This production line is designed, for example, to successively manufacture bagged products X ··· X each containing a quantity of, for example, potato chips filled therein and then to package them into a box. The production line includes, in the order from an upstream side to a downstream side with respect to the direction of transport of the bagged products, a bag forming and bagging machine 1 positioned at the preceding processing station, a relay conveyor 2, a spacing adjusting device 3, a seal checker 4, a diverting device 5, and a box packaging machine 6.

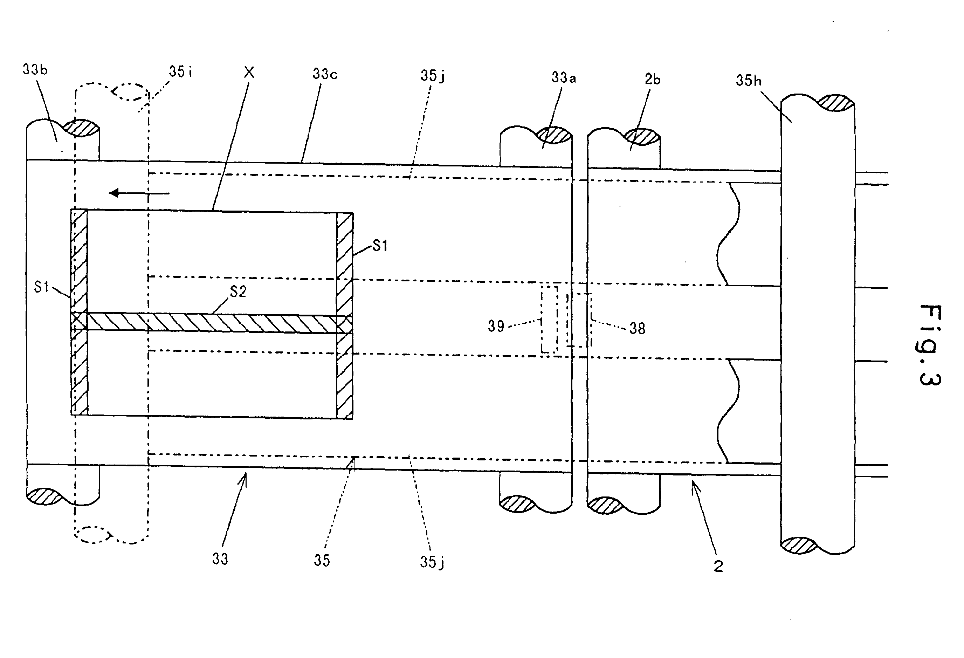

The bag forming and bagging machine 1 is operable to fill the contents, the weight of which has been set to a target weight by a combination weighing machine a, into a bag and then to discharge the bagged product X onto the relay conveyor 2. This bagging machine 1 is a bagging machine of a vertical pillow type. The bagging machine 1 is also operable to form a horizontally extending transverse seal in upper and lower ends of the bagged product X then depending vertically (as represented respectively by hatched areas S1 and S1 in Fig. 3) and also to form a vertically extending longitudinal seal (similarly represented by a hatched area S2) extending perpendicular to any one of the transverse seals. These seals are formed by a heat fusion.

In the bagging machine 1, the contents filled in the bagged product X nests in a lower region of the bag. As a result thereof, the lower region of the bag swells while the opposite upper region thereof is thin. When discharged onto the relay conveyor 2 while the bagged product X is in this condition, the bagged product X is laid on the relay conveyor 2 in such a posture that the lower region thereof swelling with the contents is oriented forwards while the upper region thereof then containing little contents is oriented rearwards. At this time, the longitudinal seal is oriented so as to extend in a direction conforming to the direction of transport. Also, in view of the fact that a longitudinal sealing device 1a forming a part of the bagging machine 1 is positioned frontward, the longitudinal seal on the bagged product X laid on the relay conveyor 2 is oriented upwards in a direction away from the relay conveyor 2. The relay conveyor 2 transports and elevates the bagged product X towards the spacing adjusting device 3.

The spacing adjusting device 3 is nothing other than the product supply apparatus to which the present invention pertains. This device 3 is operable to successively receive the bagged products X ··· X that have been transported by the relay conveyor 2 and then to supply them towards the seal checker 4. The seal checker 4 is operable to transport the bagged products X ··· X successively and at the same time to press the bagged products X ··· X one at a time with a presser plate so that the acceptability of all of the seals in each of the bagged products X ··· X can be determined in terms of the behavior of the presser plate. The diverting device 5 is operable to divert the bagged products X ··· X, which have been accepted as a result of the seal checking, successively into two rows of the bagged products, and the box packaging machine 6 is operable to package the bagged products X ··· X into a cardboard box in a plurality of stages.

### (Physical Set-up of Spacing Adjusting Device)

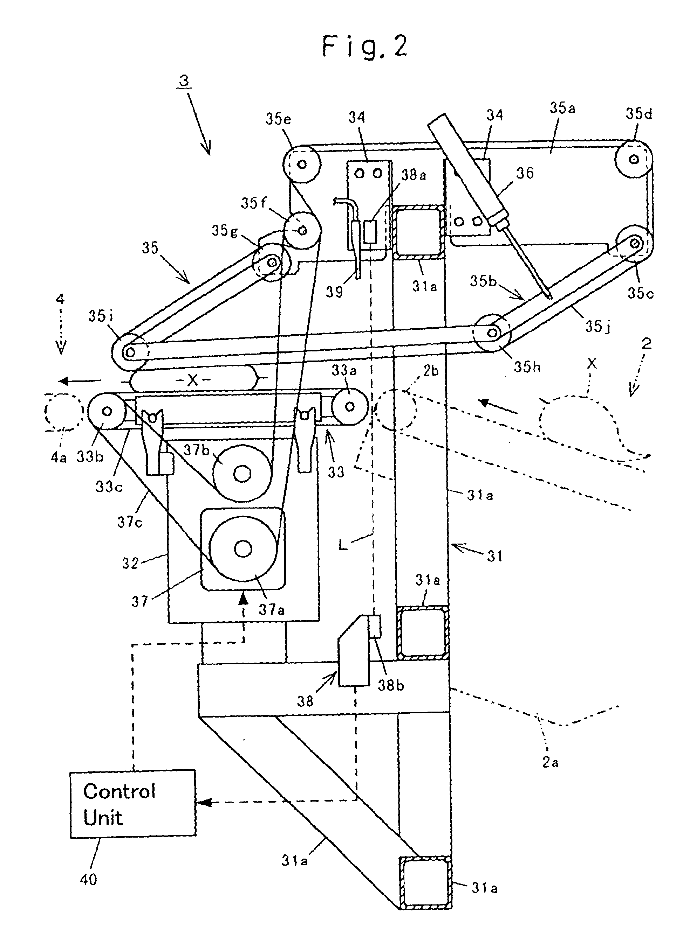

As shown in Fig. 2, the spacing adjusting device 3 includes a support framework 31 connected with a downstream end of a framework 2a of the relay conveyor 2. The support framework 31 includes a plurality of beam members 31a ··· 31a all assembled together in three dimensions. Upper and lower transport means in the form of upper and lower conveyors 33 and 35, a drive source in the form of a servo motor 37 for driving the upper and lower conveyors 33 and 35, and a product detecting means in the form of a photo-sensor 38 are assembled together in this support framework 31.

### (Lower Conveyor)

The lower conveyor 33 is mounted on an intermediate portion of the support framework 31 through a casing 32. This lower conveyor 33 is of a structure wherein a flat belt 33c is drivingly trained around and between an upstream roller 33a and a downstream roller 33b (See Fig. 3). These two rollers 33a and 33b are positioned at substantially the same height. Accordingly, a upper run of the belt 33c is deployed substantially horizontally. A downstream roller 2b of the relay conveyor 2 is positioned in the vicinity of the upstream roller 33a of the lower conveyor 33 and an upstream roller 4a of the seal checker 4 is positioned in the vicinity of the downstream roller 33b. The bagged product X are successively moved over respective gaps delimited between the adjoining rollers during the sequential transport thereof from the relay conveyor 2 to the seal checker 4 through the spacing adjusting device 3.

### (Upper Conveyor)

An upper conveyor 35 is mounted on an upper end of the support framework 31 through mounting brackets 34 ··· 34. This upper conveyor 35 includes left and right frames 35a and 35a (only one of which is shown in Fig. 2), and link mechanisms 35b and 35b cooperable with the associated frames 35a and 35a (only one of which is shown in Fig. 2) to define corresponding parallel link mechanisms. Five rollers (frame rollers) 35c to 35g and two rollers (link rollers) 35h and 35i are arranged between the frames 35a and 35a and between the link mechanisms 35b and 35b, respectively, and two juxtaposed flat belts 35j and 35j are trained around those rollers 35c to 35i while being positioned left and right (See Fig. 3).

Of the link rollers 35h and 35i, the upstream link roller 35h is positioned at a higher level than that of the downstream link roller 35i. Accordingly, respective lower runs of the belts 35j and 35j is inclined with an upstream end thereof held at a position higher in level than that of a downstream end thereof. In other words, the space between the upper juxtaposed belts 35j and 35j and the lower belt 33c, specifically the space between the respective lower runs of the upper juxtaposed belts 35j and 35j and an upper run of the lower belt 33, decreases progressively from an upstream side towards an downstream side with such space at the downstream side being narrower than that at the upstream side.

The upstream roller 35h of the upper conveyor 35 is positioned at a location upstream with respect to the upstream roller 33a. Accordingly, respective upstream ends of the upper juxtaposed belts 35j and 35j , specifically, respective upstream ends of the lower runs of the upper belts 35j and 35j are overlapped with a downstream end of the relay conveyor 2.

### (Damper)

The upper conveyor 35 is provided with a damper 36. This damper 36 is operable to damp vibrations of the link mechanisms 35b and 35b (rocking motion of the link mechanisms 35b and 35b about axes of the frame rollers 35c and 35g) which would occur when each of the bagged products X transported and elevated by the relay conveyor 2 is brought into contact with that overlapping portions of the upper juxtaposed belts 35j and 35j.

In addition, this damper 36 has a function of pulling the link mechanisms 35b and 35b upwardly while allowing those link mechanisms 35b and 35b to pivot about the frame rollers 35c and 35g. In other words, the link mechanisms 35b and 35b are kept at such a posture as shown in Fig. 2 by the equilibrium of a pulling force of the damper 36, the masses of the link mechanisms 35b and 35b and the link rollers 35h and 35i and respective tensions of the upper juxtaposed belts 35j and 35j. In other words, by adjusting the pulling force of this damper 36, the height of the lower runs of the upper juxtaposed belts 35j and 35j can be adjusted and, hence, the space between the upper and lower belts 33c and 35j and 35j can be adjusted.

### (Drive Motor)

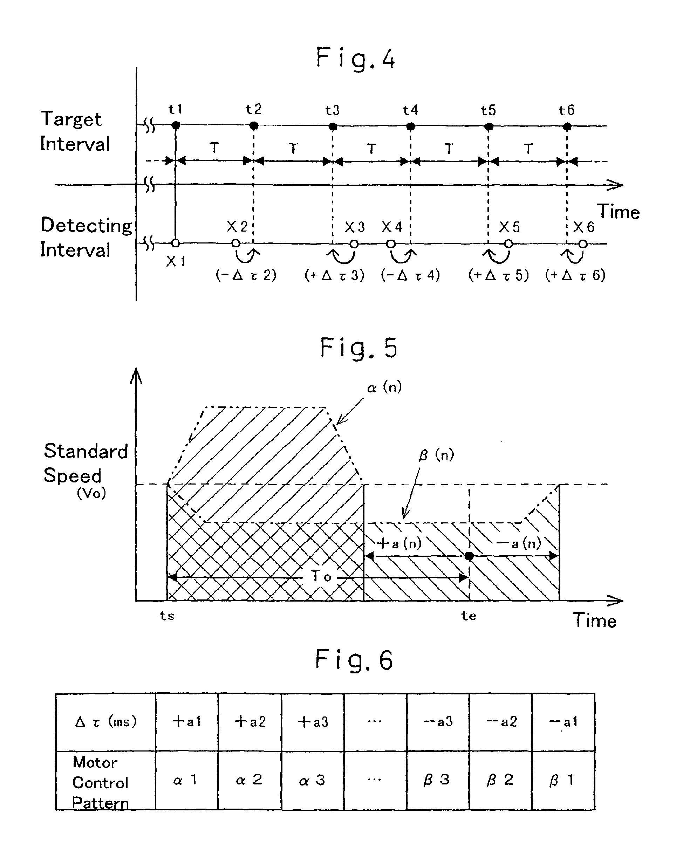

The drive motor 37 for driving the upper and lower conveyors 33 and 35 is accommodated within a casing 32. This motor 37 may be, for example, a servo motor and for each control cycle, the driving speed, the driving force, the driving amount and others can be changed as desired (See motor control pattern α and β in Figs. 5 and 6). Accordingly, the transport speed, the transport torque, the transport distance and others of each of the upper and lower conveyors 33 and 35, of which drive source is the servo motor 37, can be adjusted in various patterns.

A timing belt 37c is trained around a pulley 37a mounted on an output shaft of the drive motor 37, a pulley (roller pulley, not shown) coaxially mounted on one of the rollers, that is, the roller 33b (a drive roller) of the upper conveyor 35 and also on one of the rollers, that is, the roller 35f (a drive roller) of the lower conveyor 33, and a tension pulley 37b accommodated within the casing 32. Rotation of the motor 37 can be transmitted to the drive rollers 33b and 35f through this timing belt 37c. In this case, the above described roller pulleys have an equal diameter and, consequently, the upper and lower belts 33c and 35j and 35j can run in the same direction at the same speed. It is to be noted that the upper and lower conveyors 33 and 35 altogether constitute upper and lower transport means for transporting the bagged products X, received from the relay conveyor 2, in a downstream direction while sandwiching them therebetween.

### (Photo-sensor)

The photo-sensor 38 includes a light emitting element 38a and a light receiving element 38b positioned on upper and lower sides of the transport path for the bagged products X. The light emitting element 38a is mounted on, for example, the mounting bracket 34 whereas the light receiving element 38b is mounted on the beam member 31a. A beam of light projected from the light emitting element 38a towards the light receiving element 38b travels through a gap between the downstream roller 2b of the relay conveyor 2 and the upstream roller 33a of the lower conveyor 33 as shown by the broken line L. In other words, this photo-sensor 38 is operable to detect a leading end of each of the bagged products X at the location where the respective bagged product X is delivered from the relay conveyor 2 onto the lower conveyor 33, and then to detect receipt of the bagged product X by the spacing adjusting device 3.

### (Air Nozzle)

The interval adjusting device 3 is provided with an air nozzle 39 as a cooling means for cooling the seals in each of the bagged products X. This air nozzle 39 is disposed above the transport path for the bagged products X with its blowoff port oriented downwardly. This nozzle is positioned immediately above a space between the two juxtaposed upper belts 35j and 35j as shown in Fig. 3. In other words, since when each of the bagged products X is sandwiched between the upper and lower belts 33c and 35j and 35j, the respective bagged product X has its upper surface exposed outwardly through the space between the juxtaposed upper belts 35j and 35j, the air nozzle 39 blows an air towards an exposed portion thereof to thereby cool the forward and rearward transverse seals S1 and S1 of the respective bagged product X and, also, the longitudinal seal S2 thereof that extends in a direction conforming to the transport direction.

### (Control Unit)

As shown in Fig. 2, the interval adjusting device 3 has a control unit 40 mounted thereon. This control unit 40 is operable to control the servo motor 37 for driving the conveyors based on a result of detection provided by the photo-sensor 38 each time the bagged products X are successively delivered. Accordingly, the interval between the neighboring bagged products X ••• X discharged randomly from the bag forming and bagging machine 1 in the preceding processing station and subsequently transported by the relay conveyor 2, with respect to the transport direction can be adjusted to a target interval. This target interval (T. See Fig. 4) is so chosen as to be a interval of a size which would not allow the seal checker 4, located downstream, to result in inspection error and, also, which would not result in lowering of the handling capacity of the production line. The detail of the operation of this interval adjustment will be described later.

### [Features of the Interval Adjusting Device]

### (Multi-functionality)

This interval adjusting device 3 has a basic function of catching each of the bagged products X successively transported by the relay conveyor 2 by sandwiching it from above and below by means of the respective belts 33c and 35j and 35j of the upper and lower conveyors 33 and 35, and of transporting it towards the seal checker 4 by transporting the respective bagged product X in the downstream direction by the travel of the belts 33c and 35j and 35j while the respective bagged product X is still sandwiched therebetween. At this time, by the control of the servo motor 37, the transport speed and others associated with the transport of the bagged product X are variously controlled to adjust the interval between the neighboring forward and rearward bagged products X ••• X to a predetermined target interval T. Thus, this interval adjusting device 3 has, in the first place, a function of adjusting the interval between the neighboring products.

Also, since during the transport of the bagged products X each bagged product X is sandwiched from above and below by the upper and lower flat belts 33c and 35j and 35j, the respective bagged product X is pressed by the upper and lower belts 33c and 35j and 35j with the contents thereof consequently flattened to spread horizontally to thereby eliminate any bias. Thus, this interval adjusting device 3 has, in the second place, a function of flattening the products one at a time.

In addition, since during the transport of the bagged products X the air nozzle 39 blows an air towards each of the bagged products X, the transverse seals S 1 and S2 and the longitudinal seal S2 of each bagged product X can be cooled to thereby facilitate and complete the thermal bonding as hereinbefore described. Thus, in the third place, the interval adjusting device 3 has a function of cooling the seals.

As discussed above, the interval adjusting device 3 can perform respective operations to adjust the interval between the forward and rearward neighboring bagged products X, to flatten the bagged product and to cool the seals all at a time during the successive transport of the bagged products X. Consequently, there is no need to incorporate machines each dedicated to the particular operation in the production line and, therefore, it is possible to suppress elongation of the production line.

### (Feature associated with the Flattening Operation)

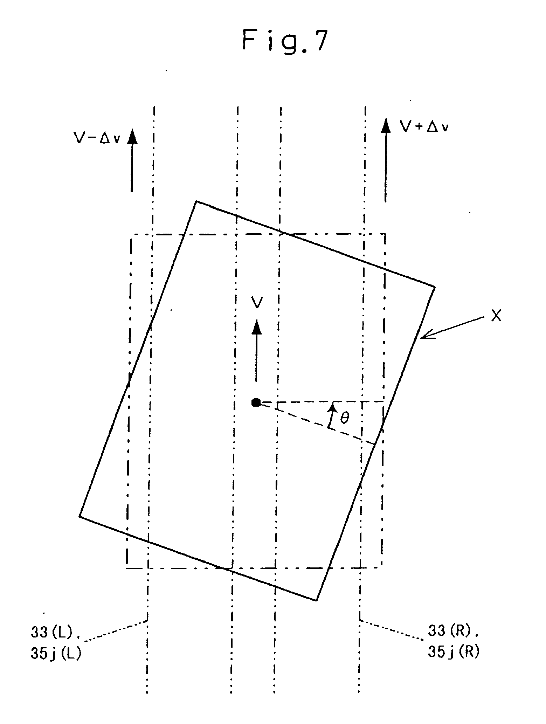

1. With this interval adjusting device 3, since the transport means 33 and 35 are disposed above and below so that each bagged product X can be sandwiched from above and below and, as a result thereof, the contents can spread in a horizontal plane, the flattening operation can be realized. Where, for example, the transport means 33 and 35 are employed left and right so that each bagged product X can be sandwiched laterally from left and right, the contents will spread in a vertical plane and, as a result thereof, some of the contents pushed upwards may fall downwards again, making it very difficult to avoid the presence of a bias of the contents within each bagged product X.
2. Also, with this interval adjusting device 3, since the leading end of each bagged product X previously sandwiched between the upper and lower transport means 33 and 35 swells by the effect of a bias of the contents while a trailing end of each bagged product X subsequently sandwiched has a room because of the absence of the contents, the contents can be pushed from the leading end towards the trailing end by the upper and lower transport means 33 and 35 to thereby flatten the respective bagged product X. If conversely the leading end of each bagged product X is empty while the trailing end thereof is crowded, this will not result in a favorable flattening operation.
3. Since arrangement has been made to flatten each bagged product X by pressing it by means of the flat belts 33c and 35j and 35j, as compared with the case in which each bagged product is flattened by causing irregularities such as projections or grooves to collide the bagged product, the impact applied to the respective bagged product X and/or the contents is so small as to minimize the risk of the bagged product X being ruptured.
4. Since each bagged product X is firmly sandwiched and thus retained by the flat belts 33c and 35j and 35j, the possibility that the interval between the forward and rearward bagged products X which has been adjusted may go wrong can be avoided, which would otherwise occur when the bagged product X being transported is displaced in position (a parallel motion within a transport plane) and/or distorted in posture (an angle of inclination θ within the transport plane. See Fig. 7).
5. Also, since the space between the upper and lower belts 33c and 35j and 35j is so designed to be larger at the upstream side and smaller at the downstream side, the pressing force acting on each bagged product X can gradually increase. As a result thereof, each bagged product X can be pressed first with a relatively small pressing force to loosen the contents with the pressing force subsequently increasing. Therefore, the flattening work can be reasonably smoothly completed while avoiding any possible cracking, deformation and/or tearing of the contents of the respective bagged product X.
6. Since the upper and lower belts 33c and 35j and 35j are adapted to be driven by the single drive source 37, not only can the respective transport speeds of the upper and lower transport means 33 and 35 coincide with each other to thereby secure a interval adjusting accuracy, but also no unreasonable stress such as, for example, twisting will develop in each bagged product X to thereby avoid such inconveniences as frictional wear, damage and/or deviation in posture of the respective bagged product X and any possible cracking and/or deformation of the contents.
7. Yet, since the upstream ends of the lower runs of the upper belts 35j and 35j are disposed upstream of the upstream end of the upper run of the lower belt 33c, the respective bagged product X transported by the relay conveyor 2 so as to elevate can be first brought into contact with the overlapped portion of the upper belts 35j and 35j. As a result thereof, the contents of the bagged product X can be loosened to a free state. Thereafter, in view of the fact that the respective bagged product X can be sandwiched between the upper and lower conveyors 33 and 35, take-in of the respective bagged product X can take place smoothly so that the flattening work can subsequently follow with no trouble.
8. Since the respective upstream ends of the upper belts 35j and 35j are so disposed as to overlap the relay conveyor 2, when being delivered, the bagged product X then in a condition being transported solely by the relay conveyor 2 is, after having been transported by the relay conveyor 2 and the upper conveyor 35 of the interval adjusting device 3, sandwiched between and transported by the upper and lower conveyors 33 and 35 of the interval adjusting device 3. Accordingly, for example, as a routine of the interval adjusting operation of the interval adjusting device 3 the transport speeds of the upper and lower conveyors 33 and 35 are controlled to increase or decrease and, as a result thereof, even when the transport speeds of the upper and lower conveyors 33 and 35, respectively, differ from that of the relay conveyor 2, a change in speed of the respective bagged product X will be so moderate that the respective bagged product X can be delivered onto and received smoothly and with no trouble by the interval adjusting device 3.
9. Furthermore, since the upper conveyor 35 is so designed as to be movable up and down by means of the link mechanisms 35b and 35b, the upper conveyor 35 can be pushed upwardly by the bagged product X then received thereby. As a result thereof, for each bagged product X, the space between the upper and lower conveyors 33 and 35 can naturally vary in dependence on the size, thickness, height, etc., of the respective bagged product X. Accordingly, such inconveniences as an insufficient sandwiching force which would occur when the space between the upper and lower conveyors 33 and 35 is too large and/or insufficiencies in operation of transport, interval adjustment and/or loosening of the respective bagged product X can advantageously be avoided. Also, a problem associated with damage to the bagged product X such as rupture of the bag or the like can be favorably eliminated, which would otherwise occur when the space between the upper and lower conveyors 33 and 35 are conversely too small enough to render the sandwiching force and the pressing force to be excessive.

### (Features associated with the Seal Cooling Function)

1. The interval adjusting device 3 is so designed as to receive through the relay conveyor 2 each of the bagged products X, then successively discharged from the bag forming and bagging machine 1 and then supply it to the seal checker 4 positioned downstream thereof. In this connection, in order to increase the handling capacity of the production line, the bagged products X discharged successively from the bag forming and bagging machine 1 are supplied in a short time to the seal checker 4 one at a time. Accordingly, it is necessary to quickly complete the thermal bonding of the seals S1 and S1 and S2 in each of the bagged products X. In view of this, the air nozzle 39 is incorporated in the interval adjusting device 3 positioned between the bag forming and bagging machine 1 and the seal checker 4 so that each bagged product X prior to being supplied to the seal checker 4 can have its seals S1 and S1 and S2 cooled. Accordingly, the thermal bonding to form the seals S1 and S1 and S2 can be completed quickly and the possibility of the respective bagged product X being ruptured for any of the seals S1 and S1 and S2 can be advantageously minimized.
2. In addition, the air nozzle 39 is disposed upstream of the upper and lower conveyors 33 and 35 so that cooling of the respective bagged product X can start prior to such bagged product X being sandwiched between and pressed by the upper and lower conveyors 33 and 35. Accordingly, the possibility of the respective bagged product X being ruptured for any of the seals S1 and S1 and S2 during sandwiching and pressing performed by the interval adjusting device 3 can be minimized.
3. Moreover, since the air nozzle 39 is disposed above the transport path so that the respective bagged product X can be cooled from an upper surface where the longitudinal seal S2 is situated, the transverse seals S1 and S1 at the forward and rearward ends of the respective bagged product X and the longitudinal seal S2 thereof can be efficiently cooled simultaneously.
4. In such case, since the longitudinal seal S2 extends in a direction conforming to the transport direction, the longitudinal seal S2 can be exposed to the outside through the space between the upper belts 35j and 35j. Accordingly, the transport of the respective bagged product X allows that portion thereof where cooling is effected to move with out the air nozzle 39 being moved and, consequently, the longitudinal seal S2 can be effectively cooled over its entire length.

### [Interval Adjusting Operation]

Fig. 4 illustrates results of comparison between target intervals T ··· T, stored in the control unit (hereinafter referred to as "ECU") 40 and take-in timing t1, t2, ···, and results of actual detection of the bagged products X ··· X by the photo-sensor 38. If the bagged products X ··· X are successively transported at respective target intervals T ··· T from the beginning, the bagged products X ··· X traverse successively across the photo-sensor 38 at respective timings t1, t2, ···. In such case, the interval adjusting device 3 need not perform the interval adjustment and the bagged products X ··· X can be transported at the same speed as that of the relay conveyor 2. The speed at that time is represented by a standard speed Vo and, if as shown in Fig. 5, the bagged products are successively transported at the standard speed Vo for a standard time To from the timing ts, at which the transport is initiated, to the timing τ at which the transport completes, the bagged products X can be successively transported past the interval adjusting device 3 and then delivered onto the seal checker 4. In other words, the product of the standard transport speed Vo multiplied by the standard transport time To represents the distance of transport (fixed: Generally corresponding to the length of the upper run of the lower belt 33c) performed by the interval adjusting device 3.

In contrast thereto, if as shown, for example, by X2 in Fig. 4, the subsequent bagged product is detected a timing (Δτ 2) earlier than the target take-in timing t2, such bagged product X2 has to be transported at a speed lower than the standard speed Vo so that at the time such bagged product X2 is delivered onto the seal checker 4 the interval between the preceding bagged product X1 and the subsequent bagged product X2 can attain the target interval T. Conversely, if as shown by X3 the subsequent bagged product is detected a timing (Δτ 3) delayed from the target take-in timing t3, such bagged product X3 has to be transported at a speed higher than the standard velocity Vo so that at the time such bagged product X3 is delivered onto the seal checker 4 the interval between the preceding bagged product X2 and the subsequent bagged product X3 can attain the target interval T.

The ECU 40 stores therein a table in which as shown I in Fig. 6, the length of time (Δτ) to be modified so as to increase or decrease is defined in correspondence with a control pattern performed by the servo motor 37. In the illustrated embodiment as shown in Fig. 6, the control pattern to be employed when the bagged product X is transported delayed and, hence, the length of time (Δτ) to be modified is a positive sign (+) is represented by α(n) whereas the control pattern to be employed when the bagged product X is transported earlier and, hence, the length of time (Δτ) to be modified is a negative sign (-) is represented by β (n). The ECU 40 compares the actual take-in timing, shown by a white circle in Fig. 4, with the standard take-in timing shown by a black circle in Fig. 4 to determine a deviation (Δτ = Target Value - Actual Value) therebetween and then to apply the deviation to the table to thereby determine the control pattern.

By way of example, where the bagged product X is to be transported at a speed higher than the standard speed Vo, as shown by the chain line α (n) in Fig. 5, the transport speed increases to a protruding trapezoidal shape. The area of surface of a hatched area corresponds to the transport distance by the interval adjusting device 3. Accordingly, the transport time can be shortened by an increment of the speed and the timing τ at which the transport completes is advanced the length of time to be modified (Δτ = +a(n)) with the interval between it and the preceding bagged product X being consequently adjusted to the target value T.

Conversely, where the bagged product X is to be transported at a speed lower than the standard speed Vo, as shown by the chain line β (n) in Fig. 5, the transport speed increases to a recessing trapezoidal shape. The area of surface of a hatched area corresponds to the transport distance by the interval adjusting device 3. Accordingly, the transport time can be prolonged by a decrement of the speed and the timing τ at which the transport completes is delayed the length of time to be modified (Δτ = -a(n)) with the interval between it and the preceding bagged product X being consequently adjusted to the target value T.

The transport speed of the interval adjusting device 3, that is, the driving speed of the servo motor 37 may represent, other than the trapezoidal change discussed above, a sinusoidal change, a constant speed change, a cycloidal change, a modified sinusoidal change, a modified constant speed change, a trapecloidal change, a one-dwell change, or a so-called universal cam curve or the like.

### [Miscellaneous]

1. As shown in Fig. 7, each of the upper and lower conveyors 33 and 35 includes left and right juxtaposed flat belts 33(L) and 33(R), 35j(L) and 35j(R) and the upper and lower left belts 33(L) and 35j(L) are used to sandwich a left portion of the bagged product X while the upper and lower right belts 33(R) and 35j(R) are used to sandwich a right portion of the bagged product X. The upper and lower left belts 33(L) and 35j(L) and the upper and lower right belts 33(R) and 35j(R) are adapted to be independently driven by separate motors.
   By this construction, if the respective transport speeds of the left and right belts are controlled separately, it is possible to further rectify the posture of the bagged product X (the angle of inclination θ within the transport plane) while the interval between the neighboring bagged products X ··· X is adjusted, each of the bagged products X is flattened and the seals S1 and S 1 and S2 are cooled by the interval adjusting device 3. Accordingly, while any possible elongation of the production line is avoided, the posture of the bagged product X relative to a corrugated cardboard box can be corrected, and the subsequent processing of boxing can be performed smoothly.
   By way of example, in the illustrated example, by driving the right belt at a speed higher by ΔV than the target speed V (the predetermined speed for the interval adjustment) and the left belt at a speed lower by ΔV than the target speed V, the bagged product X while being transported at the target speed V can be skewed an angle θ leftwards to rectify the posture thereof to assume a longitudinally oriented posture. The modified speed Δv increases in proportion to the angle θ.
2. The drive roller 35f for the upper conveyor 35 has respective portions of the endless belts 35j and 35j turned externally therearound and, accordingly, if this roller 35f is made detachable by means of a so-called snap-on latch, removal of such roller 35f would result in loosening of the belts 35j and 35j to thereby facilitate the removal of the belts 35j and 35j from the device 3 and, accordingly, a cleaning job or the like can be facilitated.
3. Since it is sufficient for the damper 36 to pull upwardly only portions of the link mechanisms 35b and 35b and no weight of the other frame rollers 35c to 35g of the upper conveyor 35 is loaded thereon, the damper 36 may have a compact size. It is, however, to be noted that while the damper is employed solely to absorb the vibrations of the link mechanisms 35b and 35b, a return spring or the like may be additionally employed for pulling the link mechanisms 35b and 35b upwardly.
4. The manner of cooling the seals S1 and S1 and S2 may be not be limited to the coolant blow, but may be accomplished by sandwiching the bagged product X by means of transport belts then cooled to a low temperature. In such case, the upper belt may not be divided into two, but a single belt may be employed therefore. Also, the bagged product X is cooled while the bagged product X including the seals S1, S1 and S2 is totally sandwiched and pressed by such belt and is transported in this manner. Also, even in the case of the coolant blow, the upper belt may not be divided into two, but may be a single belt. It is, however, that in such case, the belt in the form of a mesh belt should be employed so that the bagged product X can be exposed to the outside. In addition, when the belt is to be divided, the number of division may not be limited to two, but three or more so that a portion of the bagged product X to be cooled can be exposed to the outside.
5. It is sufficient for the air nozzle 39 to be disposed on one side adjacent to the longitudinal seal S2 and may not therefore be limited to the position above the bagged product X, but may be disposed at a position below the transport path depending on the position of the longitudinal seal S2 being transported.
6. Since the bagged product X is pressed by the upper and lower belts 33c and 35j and 35j and the bagged product X is therefore flattened, a tension acts on the upper surface of the bagged product X and an exposed position on the upper surface of the bagged product X between the upper belts 35j and 35j is tensioned flat, the air blown off from the air nozzle 39 can favorably impinge upon the seals S1, S1 and S2 to facilitate the cooling operation efficiently.
7. Since as a result of the flattening operation, the upper surface of the bagged product X is held flat, when the bagged product X is to be sucked and captured from above during the subsequent processing such as a diverting operation and/or a packaging operation or the like, such suction can be performed effectively and the bagged product X can be successfully captured.
8. The quality inspecting machine 4 may not be always limited to the seal checker, but may be, for example, a weight checker, an X-ray inspecting machine, a metal detector or the like and one or a combination of them may be employed and arranged, for example, in a series with respect to each other.
9. Where the target interval T varies depending on the quality inspecting machine 4, if the interval adjusting device 3 is made to receive the target interval T from the quality inspecting machine 4, the target value T may not be re-set on the side of the interval adjusting device 3 each time the quality inspecting machine 4 is changed. Similarly, where the target interval T varies depending on the type of the bagged products X, if the interval adjusting device 3 is made to receive the target interval T from an upstream product manufacturing apparatus (in the illustrated embodiment, for example, the bag forming and bagging machine 1) or the like, the target value T need not be re-set on the side of the interval adjusting device 3 each time the product manufacturing apparatus is changed or the type of the bagged products X are changed even though the product manufacturing apparatus remains the same.

Although the present invention has been fully described in connection with the preferred embodiments thereof with reference to the accompanying drawings which are used only for the purpose of illustration, those skilled in the art will readily conceive numerous changes and modifications within the framework of obviousness upon the reading of the specification herein presented of the present invention. Accordingly, such changes and modifications are, unless they depart from the scope of the present invention as delivered from the claims annexed hereto, to be construed as included therein.

## Claims

1. A product supply apparatus (2, 3) disposed between a packaging machine (1) and a quality inspecting machine (4) positioned downstream thereof for successively receiving products (x), transported from the packaging machine (1), and then supplying them towards the quality inspecting machine (4), which apparatus (2, 3) comprises upper and lower transport means (33, 35) for transporting the products (x) successively while sandwiching the products (x) from above and below; **characterised by** a detecting means (38a, 38b) for detecting the leading end of each of the products (x) as it is delivered onto the lower transport means; and an interval adjusting means (40, 37a) for controlling the transport means (33, 35) by adjusting a speed of the transport means (33, 35), depending on a difference between a target take-in timing and an actual take-in timing based on a result of detection by the detecting means (38a, 38b) each time the product (x) is received so as to attain a target interval and for adjusting an interval between the forward and rearward neighbouring products (x) to a target interval on a conveyor positioned downstream of the transport means (33, 35).

2. The product supply apparatus as claimed in Claim 1, wherein a space between the upper and lower transport means gradually varies to a narrow space at a downstream side.

3. The product supply apparatus as claimed in Claim 1, wherein the upper and lower transport means are adapted to be driven by a single drive source.

4. The product supply apparatus as claimed in Claim 1, wherein an upstream end of the upper transport means is disposed at a location upstream of an upstream end of the lower transport means.

5. The product supply apparatus as claimed in Claim 1, wherein the upper transport means is movable up and down.

6. The product supply apparatus as claimed in Claim 1, further comprising a cooling means for cooling a sealed portion of each of the products which have been bagged.

7. The product supply apparatus as claimed in Claim 6, wherein the cooling means is operable to cool each of the bagged products from a side where a longitudinal seal is formed.

8. The product supply apparatus as claimed in Claim 1, wherein the transport means is provided with a posture modifying means for sandwiching
each of the products at a plurality of locations and for controlling a transport speed at each of those locations to thereby correct a posture of each of the products.

## Patentansprüche

1. Produktzufuhrvorrichtung (2, 3), die zwischen einer Verpackungsmaschine (1) und einer Qualitätsinspektionsmaschine (4) angeordnet ist, die sich stromabwärts davon befindet, um nacheinander Produkte (x) aufzunehmen, die von der Verpackungsmaschine (1) transportiert werden, und um sie dann in Richtung der Qualitätsinspektionsmaschine (4) zu führen, wobei die Vorrichtung (2, 3) obere und untere Transportmittel (33, 35) zum Transportieren der Produkte (x) nacheinander umfasst, während die Produkte (x) von oben und unten zusammengeführt werden, **gekennzeichnet durch** ein Detektionsmittel (38a, 38b) zum Detektieren des führenden Endes jedes der Produkte (x), wie es auf die unteren Transportmittel geliefert wird; und ein Intervalleinstellmittel (40, 37a) zum Steuern der Transportmittel (33, 35) **durch** Einstellen einer Geschwindigkeit der Transportmittel (33, 35) in Abhängigkeit eines Unterschieds zwischen einer Zieleingabezeit und einer tatsächlichen Eingabezeit aufgrund eines Detektionsergebnisses **durch** die Detektionsmittel (38a, 38b) jedes Mal, wenn das Produkt aufgenommen wird, um ein Zielintervall zu erhalten, und um ein Intervall zwischen vorwärts und rückwärts benachbarten Produkten (x) in einem Zielintervall auf einem Förderer einzustellen, der sich stromabwärts von den Transportmitteln (33, 35) befindet.

2. Produktzufuhrvorrichtung nach Anspruch 1, bei welcher ein Raum zwischen den unteren und oberen Transportmitteln graduell zu einem engen Raum an einer stromabwärtigen Seite variiert.

3. Produktzufuhrvorrichtung nach Anspruch 1, bei welcher die unteren und oberen Transportmittel für den Antrieb durch eine Einzelantriebsquelle geeignet sind.

4. Produktzufuhrvorrichtung nach Anspruch 1, bei welcher ein stromaufwärtiges Ende der oberen Transportmittel an einem Ort stromaufwärts eines stromaufwärtigen Endes der unteren Transportmittel angeordnet ist.

5. Produktzufuhrvorrichtung nach Anspruch 1, bei welcher die oberen Transportmittel auf und ab beweglich sind.

6. Produktzufuhrvorrichtung nach Anspruch 1, welche weiterhin Kühlungsmittel zum Kühlen eines versiegelten Abschnitts jedes der Produkte umfasst, welche eingetütet wurden.

7. Produktzufuhrvornchtung nach Anspruch 6, bei welcher das Kühlungsmittel betätigbar ist, um jedes der eingetüteten Produkte von einer Seite zu kühlen, an der ein längsgerichtetes Siegel gebildet ist.

8. Produktzufuhrvorrichtung nach Anspruch 1, bei welcher das Transportmittel mit einem Anordnungsmodifizierungsmittel ausgestattet ist, um jedes der Produkte an einer Vielzahl von Orten aufeinanderzustapeln und um eine Transportgeschwindigkeit an jedem dieser Orte zu steuern, um **dadurch** eine Anordnung jedes der Produkte zu korrigieren.

## Revendications

1. Appareil (2, 3) d'alimentation en produits, disposé entre une machine d'emballage (1) et une machine de contrôle de qualité (4) positionnée en aval de celle-ci pour recevoir successivement des produits (x) transportés depuis la machine d'emballage (1), et les faire ensuite avancer vers la machine de contrôle de qualité (4), lequel appareil (2, 3) comprend des moyens de transport supérieur et inférieur (33, 35) pour transporter les produits (x) successivement, tout en prenant les produits (x) en sandwich par le dessus et le dessous, **caractérisé par** un moyen de détection (38a, 38b) pour détecter l'extrémité avant de chacun des produits (x) au moment où il est délivré sur le moyen de transport inférieur, et un moyen (40, 37a) de réglage d'un intervalle, pour commander les moyens de transport (32, 35) en ajustant une vitesse des moyens de transport (33, 35) en fonction d'une différence entre une cadence cible d'admission et une cadence réelle d'admission, sur base dd'un résultat d'une détection par les moyens de détection (38a, 38b) chaque fois que le produit (x) est reçu, de façon à atteindre un intervalle cible, et pour ajuster un intervalle entre les produits (x) voisins, avant et arrière, à un intervalle cible sur un transporteur disposé en aval des moyens de transport (33, 35).

2. Appareil d'alimentation en produits selon la revendication 1, dans lequel un écartement entre les moyens de transport supérieur et inférieur varie progressivement jusqu'à un faible écartement d'un côté aval.

3. Appareil d'alimentation en produits selon la revendication 1, dans lequel les moyens de transport supérieur et inférieur sont prévus pour être entraînés par une seule source d'entraînement.

4. Appareil d'alimentation en produits selon la revendication 1, dans lequel une extrémité amont du moyen de transport supérieur est disposée dans une position en amont d'une extrémité amont du moyen de transport inférieur.

5. Appareil d'alimentation en produits selon la revendication 1, dans lequel le moyen de transport supérieur est mobile vers le haut et vers le bas.

6. Appareil d'alimentation en produits selon la revendication 1, comprenant de plus un moyen de refroidissement pour refroidir une portion scellée de chacun des produits qui ont été ensachés.

7. Appareil d'alimentation en produits selon la revendication 6, dans lequel le moyen de refroidissement peut être utilisé pour refroidir chacun des produits ensachés à partir du côté où est formé un joint longitudinal.

8. Appareil d'alimentation en produits selon la revendication 1, dans lequel les moyens de transport sont pourvus d'un moyen de modification de la position, pour prendre en sandwich chacun des produits en plusieurs endroits, et pour commander une vitesse de transport en chacun de ces endroits pour ainsi corriger une position de chacun des produits
